# EUROPEAN PATENT SPECIFICATION

(11) **EP 1 546 597 B1**
(45) Date of publication and mention of the grant of the patent: **30.07.2008**
(21) Application number: 03751609.3
(22) Date of filing: 24.09.2003
(51) Int. Cl.: F16L 23/00

(54) **FLANGE COUPLING**
FLANSCHVERBINDUNG
COUPLAGE PAR BRIDE

(30) Priority: 24.09.2002 NL 1021523
(43) Date of publication of application: 29.06.2005
(73) Proprietor: Pathuis, Martin, 9781 BZ Bedum (NL)
(72) Inventor: Pathuis, Martin, 9781 BZ Bedum (NL)
(74) Representative: Grootscholten, Johannes A.M.
(86) International application number: PCT/NL2003/000654
(87) International publication number: WO 2004/029495

(56) References cited:
- GB-A- 2 340 570

## Description

The present invention relates to a method for assembling a connection of at least one tube segment and a substantially flat element, such as of an additional tube segment with a cold connection therebetween, comprising: a radially protruding flange on the tube segment at or close to the end of the tube segment to be connected; a gasket for clamping against the flange; and a number of couplings distributed round the periphery of the flange for clamping the gasket with force between the flange and the element. Here the flat element is often a flange of the additional tube segment, on which the following description is focussed.

It is generally known to realize such cold connections with a method known as diametrical tightening.

In diametrical tightening the couplings, which are distributed round the periphery of the flanges, are tightened in a predetermined pattern. Such a pattern can for instance have a star shape, and the couplings can for instance be formed as nut-bolt couplings. After tightening of a nut-bolt coupling, or after further tightening of the coupling in question, a nut-bolt coupling lying diametrically opposite is then tightened.

It is the intention here that an equal or uniform pressure is exerted on the gasket round the periphery of the flanges. This is important in respect of leakage losses for reasons known to the skilled person.

In such methods according to the known art it is however assumed that the flanges are aligned and are in parallel position when they are assembled, which is however by no means always the case. This is therefore the drawback of the known art, namely that losses can occur when the gasket is not enclosed with uniform force or pressure between the flanges.

It is noted that gaskets usually also have to be replaced regularly. The method according to the present invention therefore relates to assembly for realizing a system of tube segments, but also to replacing gaskets in an existing system. The present invention also relates to the cold connection between tube segments, a system of pipes with tube segments and such cold connections, and installations with such a pipe system and also other components therein, wherein the above stated problems of the known art are obviated or at least considerably reduced. The present invention provides for this purpose a method which is distinguished by adjusting the flange in deforming manner relative to the element and/or the associated tube segment at least almost without pressure on the gasket, and subsequently tightening the couplings while freely clamping the gasket in order to connect the flange to the element with the gasket therebetween under pressure which is distributed radially in uniform manner.

By adjusting the flange in deforming manner it is possible to clamp the gasket therebetween in reliable manner so as to achieve an improved leakage-free connection of the tube segment. This is achieved in that the thus adjusted flange can clamp the gasket against the flange under pressure which is uniformly distributed radially. This has the result that not only can the connections be deemed to a greater extent leakage-free, but that this characteristic can also be preserved for longer.

It can therefore be the case that adjusting of the flange comprises of: measuring the position of the flange relative to the element around the periphery thereof; fixing the flange at a position along the periphery where the measured position has a minimal deviation relative to a desired position; and deforming the flange and/or the associated tube segment in controlled manner until at least around the periphery thereof the flange has a minimal deviation relative to the desired position. In preference a situation is then of course reached in which exactly the desired position is brought about. This embodiment is highly suitable for a situation where flanges are not parallel but have an oblique position relative to each other. At the position where the distance between the flanges is smallest the fixation can then take place, and the rest of at least one of the flanges is then deformed around the periphery such that a parallel position of the flanges is obtained. The fixing can take place in a number of different ways. Use can herein be made of an abutment block, a flange spreader or preferably a pressure block with which forces acting thereon can be recorded, or another random auxiliary means.

The measuring can also take place in various different ways. This may be done extremely precisely with measuring means such as a measuring rule etc., but it is possible to find the point for fixation in a somewhat less precise manner, for instance visually without auxiliary or measuring means.

The deforming can take place by tightening couplings at a distance from the position of fixation. This is favourable because no additional auxiliary means are then needed for the deforming and the couplings, for instance nut-bolt couplings, fulfil a dual function during the deforming adjustment and during closing or assembly of the whole.

It is preferably ensured that not only the outer edge of the flanges fit precisely onto each other but the whole contact surfaces of the flanges which come into contact with the gasket in the assembled state. It is herein possible that the contact surface comprises an imprint which is enclosed by an annular flange part for engagement by and positioning of the couplings and which has a form corresponding with the gasket, against which imprint the gasket must come to lie and which imprint bulges relative to the annular flange part on the side of the flange opposite the tube segment. At the fixation point the edge of the imprint then forms a tilting point during closing or adjusting if this edge of the imprint is not fixed.

In order to prevent the possibility that adjusting of the flanges in deforming manner can detract per se, at a later stage or during assembly, from the reliability of the connection that is formed or to be formed, it must be taken into account that the degree of deformation does not become too great. For this purpose an initial position of the flange can be compared to a limit value, and enclosing of the gasket can be abandoned if the initial position exceeds the limit value.

As limit value can be taken the force required for parallel adjustment of the flanges by deforming thereof.

It is also possible for the method to comprise of determining an initial position of the flange to be connected, determining an associated parameter such as force required for deforming adjustment of the flange, and making a selection in accordance therewith of a coupling and/or gasket suitable for this purpose from groups of couplings and gaskets suitable for specific conditions, such as the relevant parameter. Adjustment then takes place on the assumption that predetermined couplings and gaskets are used. Closing takes place however only with these predetermined means if it can take place within permissible margins for these means; the assumption is otherwise modified, and other couplings and gaskets are used which are suitable for the actually prevailing conditions.

A further step in the method according to the invention is preferably aligning the tube segment with the flange and the element prior to tightening of the couplings.

The present invention will be elucidated hereinbelow on the basis of the annexed drawing, in which the same or similar components are designated with the same reference numerals, and in which:
fig. 1 shows a highly schematic view of an installation with a pipe system constructed in accordance with the present invention;
fig. 2 shows schematically a perspective view of tube segments and a cold connection prior to assembly thereof with a method according to the present invention;
fig. 3A to 3C show a number of configurations of relative positioning which, without further measures according to the present invention, could result in unreliable cold connections; and
fig. 4 gives a schematic indication of an embodiment for adjusting at least one flange in deforming manner.

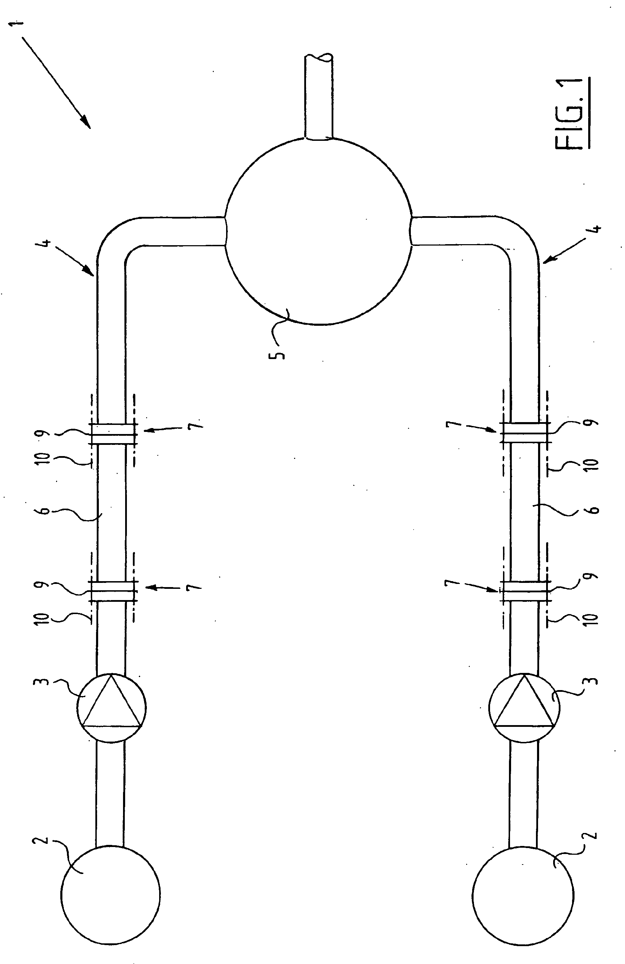

Fig. 1 shows an installation 1 to be assembled in accordance with the present invention.

The installation 1 comprises two sources 2 of fluid which are each connected to a pump 3 which, via a system of pipes 4, each carry the fluids from sources 2 to a station in the form of a mixing chamber 5. The systems of pipes 4 each comprise a number of tube segments 6 with cold connections 7 therebetween. Cold connections 7 are formed by flanges 8 on the outer ends of tube segments 6 and gaskets 9 therebetween, wherein nut-bolt couplings 10 have to be arranged around the periphery of flanges 8. This to clamp gaskets 9 between the flanges in leakage-free manner to allow no loss of fluid from sources 2 during transport to mixing chamber 5.

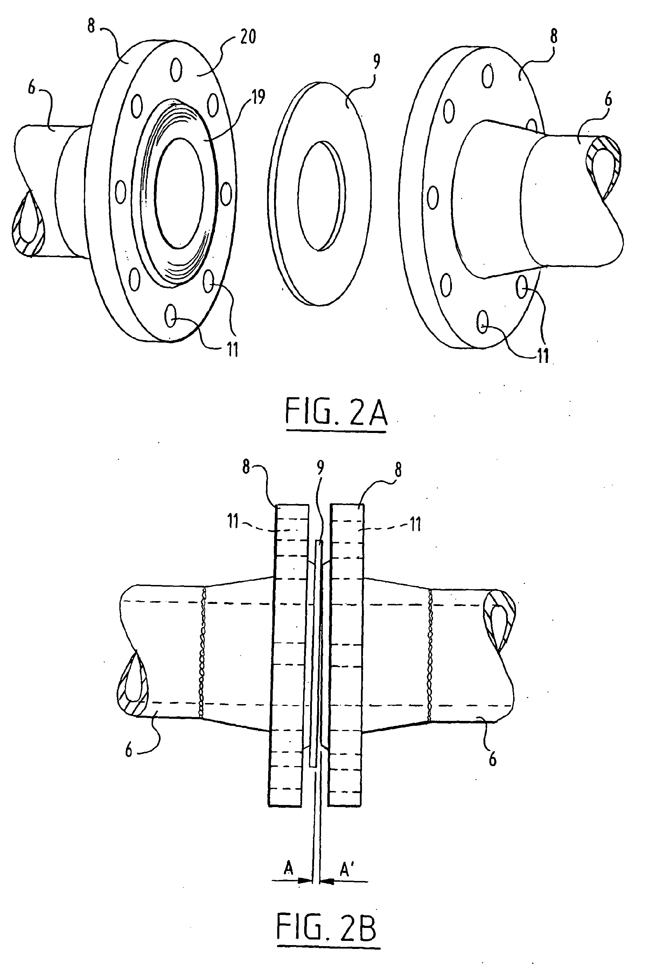

Fig. 2 shows in more detail a perspective view of the cold connections to be thus formed in order to assemble and connect tube segments 6 using flanges 8 and while enclosing gasket 9. Fig. 2A in particular shows additionally relative to fig. 1 that flanges 8 are provided with holes 11 for placing therethrough of the nut-bolt couplings, and gasket 9 can also be provided with such holes 12, although in this embodiment the size of gasket 9 is limited to the dimensions of imprints 19 on flanges 8 around which extends an annular flange part 20 with holes 11 therein. It is noted that the gasket 9 is dimensioned here so that it comes to lie wholly on or outside the periphery of a circle of imprint 19, which is located inside the position of holes 11 in flanges 8.

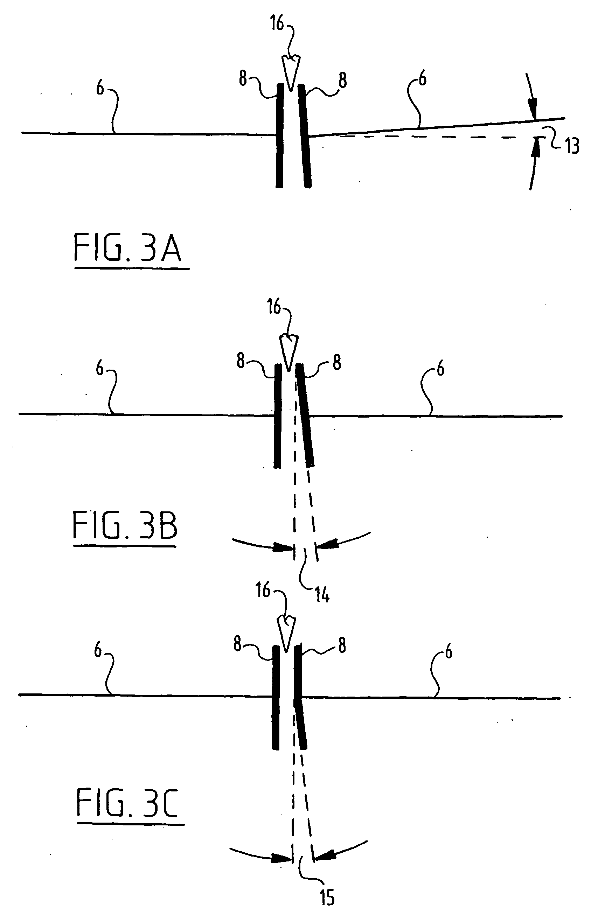

Fig. 2B shows, just as fig. 3A, a situation where flanges 8 are "beaked". This means that the flanges are not parallel before they have to be connected. Connection takes place by tightening nut-bolt couplings 10 as already stated above. The degree of deviation between flanges 8 is indicated with double arrow A-A' in fig. 2B. The deviation can be given in degrees or radials, although use is more preferably made here of a measurement in millimetres, for instance at the point along the periphery of imprints 19 where the relative gap is greatest. An indication can be obtained herefrom as to whether there is still any point in adjustment. In the case of too great a deviation it may be decided to forgo adjustment of the flanges because too much damage could thereby be caused to the material of the flanges and/or of the tube segments 6 behind them. This measurement, preferably in millimetres, can also give an indication as to whether predetermined nut-bolt couplings 10 and/or gasket 9 are indeed suitable for use to close the flanges with the gasket therebetween. If for instance a greater deformation of flanges 8 is required than is possible with the nut-bolt couplings 10, the use of which is intended for the purpose of closing the flanges, it may be decided to use heavier nut-bolt couplings. If the deviation, preferably in millimetres, between flanges 8 has a value higher than another threshold value, it is possible to opt for a gasket other than that intended for use, for instance a thicker, a more rigid gasket, and so on.

Apart from this measure, preferably in millimetres, it may also be decided to use other nut-bolt couplings 10 and/or gaskets 9 on the basis of a force required to adjust the flanges. This will be further described hereinbelow with reference to fig. 3A to 3C.

Fig. 3A, 3B and 3C show a number of the possible configurations which occur in practice and which, according to the known art, can result in the realizing of insufficiently reliable cold connections between tube segments.

Fig. 3A shows a situation wherein the tube segments 6 to be connected do not lie in line and are therefore not parallel to each other, with the consequence that the flanges 8 on the ends of tube segments 6 are not parallel either because flanges 8 are at right angles to the longitudinal direction of tube segments 6. The "deviation" is indicated with a double arrow 13 in fig. 3A.

Fig. 3B shows another situation wherein one of the flanges 8 is not at a right angle to the longitudinal direction of tube segment 6 of which the flange in question forms part. The "deviation" is indicated with a double arrow 14.

As the final example of configurations which can occur in practice and then result in insufficiently reliable connections, fig. 3C shows a situation wherein a flange 8 is partially at a right angle to the longitudinal direction of the associated tube segment 6, but the flange is bent, and a portion of this flange therefore has a deviation relative to a vertical position in relation to the longitudinal direction of the associated tube segment 6, this being indicated with double arrow 15.

Figures 3A, 3B and 3C show in each case a wedge 16 at a location where the deviation between flanges 8 associated with the different tube segments 6 is smallest. This may therefore be a single radial position, as in the case of fig. 3A and 3B, but may also include a range of radial positions, as in the case of fig. 3C.

The wedge 16 can take diverse forms. Use can for instance be made herefor of a standard flange spreader, which is also applied when an existing pipe system of tube segments assembled with each other is taken out of operation in order to replace the gaskets 9 between the flanges. It will be apparent that diverse other components, such as a flat steel beam or plate, can also be used to serve as wedge 16 instead of such a flange spreader. In preference however, a pressure block is used as wedge 16 for recording the forces exerted during adjustment of flanges 8.

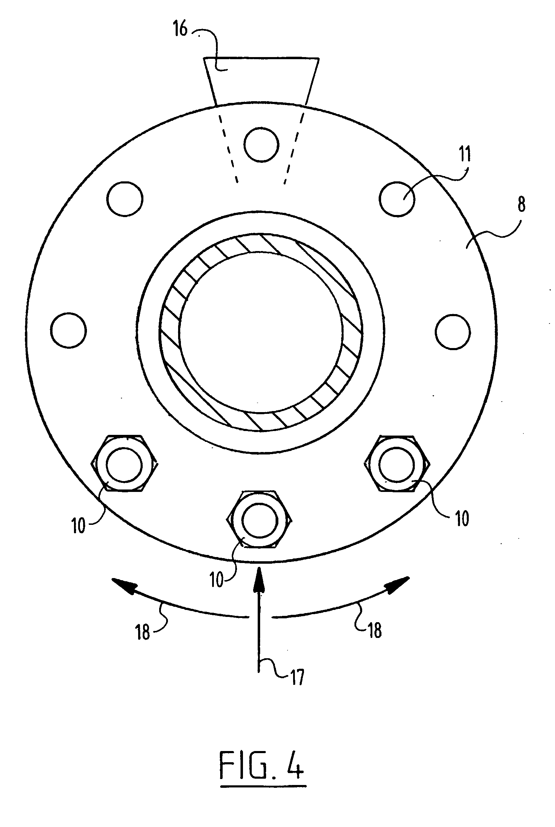

Fig. 4 shows schematically the manner in which deforming adjustment of the flanges can be realized in a possible embodiment of the present invention. Use can herein be made of nut-bolt couplings 10 which extend through the holes 11 in flanges 8. Fig. 4 corresponds to a random one of the configurations of fig. 3A, 3B and 3C, wherein the smallest deviation between flanges 8 is located at the top of the figure, which can be established with a (more or less) accurate measurement. Wedge 16 is subsequently placed at the location of the smallest deviation between the two flanges 8. Nut-bolt couplings 10 are then tightened on the side of the flanges opposite the wedge or peg 16, starting with the nut-bolt coupling 10 situated directly opposite or diametrically opposite wedge 16. This nut-bolt coupling 10 is indicated with arrow 17.

Other nut-bolt couplings are then tightened for the purpose of parallel adjustment of the flange or flanges 8 in deforming manner at positions where this is necessary. The work is preferably carried out herein along the periphery of flanges 8. This means that, after tightening the nut-bolt coupling 10 indicated with arrow 17, the nut-bolt couplings 10 located adjacently thereof along the periphery are tightened, this being indicated with arrows 18. A reciprocal pattern is preferably also used here. This means that the nut-bolt coupling 10 indicated with arrow 17 is first tightened, followed by the nut-bolt coupling 10 adjacently thereof in clockwise direction, followed in turn by the nut-bolt coupling 10 located two positions "back" in counter-clockwise direction relative thereto. It is thus possible to work toward the position of the smallest deviation until the deviation has been minimized or removed in deforming manner. Only then are the flanges closed with the gasket 9 therebetween, and can use then be made of a standard method to increase the force or pressure on the gasket, for instance diametrical tightening. To this end the wedge 16 is of course removed during the closing of the connection following the deforming adjustment of the flanges.

In the above described process diverse parameters can determine the further progress of the closure of flanges 8. The deviation of flanges 8 in degrees and/or in millimetres has already been described above. During the deforming adjustment of the flanges use can be made of a torque wrench to tighten nut-bolt couplings 10. The forces required here to bring about the desired positioning of flanges 8 relative to each other can be recorded, as can forces to be recorded by a wedge 16 in the form of a pressure block. These forces can determine the final choice of the type of gasket and the type of nut-bolt coupling, as does the initial position of flanges 8. It is possible for instance to opt for heavier nut-bolt couplings 10 where a force greater than expected or greater than a chosen threshold value is necessary for deforming adjustment of the flanges. The same applies for the wedge 16 in the form of a pressure block.

This may even result in a situation where it is possible to opt for different nut-bolt couplings locally round the periphery of the flanges. This depends entirely on the protocol chosen in the deforming adjustment and in the actual tightening of flanges 8. Although to the best knowledge of the inventors gaskets 9 with characteristics varying around the periphery thereof do not currently exist, such gaskets are not precluded as possible solution for parameters which vary round the periphery of the flanges 8 during deforming adjustment in order to bring about a reliable cold connection thereto.

Described above is only one possible embodiment, with a few variants thereof, of a method according to the present invention. For the deforming adjustment of flanges use can be made of means other than the couplings which are also used for closing the flanges per se. An example of such an alternative could be a number of clamps which are preferably distributed uniformly over that part of the periphery of the flanges which must be adjusted in parallel in deforming manner. It is also possible that means exerting such forces for the deforming adjustment do not engage on both flanges of separate tube segments to be mutually connected, but on such a tube segment itself, together with the associated flange. There are also possible configurations other than those shown in fig. 3 which could be remedied by deforming adjustment of at least one flange so as to produce a more reliable connection. The wedge or the pressure block does not have to be a single element but can have a form corresponding with the flange itself, within a range of for instance 10, 20, 30, 45 etc. degrees. When a flange such as that in fig. 3C is then found to be usable over a considerable part of the periphery of this flange, various of such peg or wedge parts can also be placed between the flanges within the range in which the relevant flange is found to be accurate in terms of position relative to another flange.

It is further noted that when the deforming adjustment of (a part of) a flange requires too much force, it would be possible to forgo closure of the flanges with a gasket therebetween. Such an excessive force can be seen as an indication that a thus adjusted flange could have suffered damage as a result of such a great force. The initial position of flange to be adjusted in deforming manner can also already give such an indication, when the "deviation" (double arrows 13, 14 and 15 in fig. 3A, 3B and 3C) is greater than a predetermined number of degrees, for instance 3 or 5, or preferably millimetres since these provide a more absolute indication of the (de)forming to be realized.

It is also possible that an initial position of a flange exhibits a deviation greater than a determined threshold value or exceeds a threshold value corresponding to the force necessary for adjusting the flanges in (de)forming manner, wherein this threshold value is adapted to the use of predetermined couplings and/or gaskets. Exceeding of the threshold values can entail that other couplings and/or gaskets are going to be used to actually close the connection. It is then not necessary to always forgo closing when such threshold values are exceeded, although this can result in a well-considered choice of for instance heavier couplings, thicker of more rigid gaskets etc. A pressure block at a point of fixation can also play a part in such considerations, albeit in order to forgo closing or making another choice of gasket and/or coupling when a threshold value thereof is exceeded.

It is further also noted that the use of the nut-bolt couplings for deforming adjustment of the flanges, or in any case of at least one flange, has the advantage that the whole contact surface which comes into contact with the gasket between the flanges can be at least substantially deformed. When a force is exerted here on both flanges of tube segments to be mutually connected, it is possible to elect not to exert forces on a flange extending around the periphery thereof at right angles to the longitudinal direction of the associated tube segment when these forces are substantially intended for deforming adjustment of the other of the two flanges. Use can be made for this purpose of the above stated option wherein the forces are exerted between a tube segment and a flange to be adjusted by deformation which is associated with this tube segment, although a flange which does not have to be adjusted by deformation can also be strengthened in one way or other so as to remove it from the influence of forces, or in any case to make this influence smaller. Such an option has the advantage that a flange found to be per se usable in the initial position is deformed so as to fit onto another flange which is not satisfactory and has a deviation. This can provide a considerable advantage in respect of reuse.

## Claims

1. Method for assembling a connection of at least one tube segment (6) to a substantially flat element (8), such as an additional tube segment with a cold connection thereon, which comprises: a radially protruding flange on the tube segment at or close to the end of the tube segment to be connected; a gasket (9) for clamping against the flange; and a number of couplings (10, 11) distributed round the periphery of the flange for clamping the gasket with force between the flange and the element, wherein the method comprises the steps of: adjusting the flange in deforming manner relative to the element and/or the associated tube segment at least almost without pressure on the gasket, and subsequently tightening the couplings while freely clamping the gasket in order to mutually connect the flange and the element with the gasket therebetween under pressure which is distributed radially in uniform manner.

2. Method as claimed in claim 1, wherein adjusting of the flange comprises of: measuring the position of the flange relative to the element around the periphery thereof; fixing the flange at a position along the periphery where the measured position has a minimal deviation relative to a desired position; and deforming the flange and/or the associated tube segment in controlled manner until at least around the periphery thereof the flange has the minimal deviation relative to the desired position.

3. Method as claimed in claim 2, wherein the deforming comprises of: tightening couplings at a distance from the position of fixation.

4. Method as claimed in claim 1, 2 or 3, wherein the flange comprises a contact surface (19) enclosed by a periphery for clamping the gasket therebetween in an assembled state of the connection, further comprising of deforming the contact surface of the flange in controlled manner.

5. Method as claimed in claim 4, wherein the contact surface comprises an imprint which is enclosed by an annular flange part (20) for engagement by and positioning of the couplings and which has a form corresponding with the gasket, against which imprint the gasket must come to lie and which bulges relative to the annular flange part on the side of the flange opposite the tube segment.

6. Method as claimed in any of the foregoing claims, further comprising of comparing an initial position of the flange relative to the element with a limit value, and tightening the couplings while enclosing the gasket only when this initial position corresponds with a value lower than the limit value.

7. Method as claimed in claims 2 and 6, comprising of detecting a force required for parallel adjustment of the flange, wherein the limit value is a predetermined value of this force.

8. Method as claimed in any of the foregoing claims, further comprising of determining an initial position of the flange to be connected, determining an associated parameter, such as force, required for deforming adjustment of the flange, and making a selection in accordance therewith of a coupling and/or gasket suitable for this purpose from groups of couplings and gaskets suitable for specific conditions, such as the relevant parameter.

9. Method as claimed in any of the foregoing claims, further comprising of aligning the tube segment with the flange and the element prior to tightening of the couplings.

## Patentansprüche

1. Verfahren zum Montieren eines Anschlusses wenigstens eines Rohrsegments (6) an ein im Wesentliches flaches Element (8), wie ein zusätzliches Rohrsegment mit einem kalten Anschluss darauf, welches umfasst: einen radial hervorstehenden Flansch auf dem Rohrsegment beim oder nahe am Ende des zu verbindenden Rohrsegments; eine Dichtung (9) zum Klemmen gegen den Flansch; und eine Anzahl von Kopplungen (10, 11), die um den Rand des Flansches verteilt sind, um die Dichtung mit Kraft zwischen den Flansch und das Element zu klemmen, wobei das Verfahren die Schritte umfasst: deformierendes Anpassen des Flansches relativ zum Element und/oder dem dazugehörigen Rohrsegment wenigstens fast ohne Druck auf die Dichtung, und anschließendes Festziehen der Kopplung, während die Dichtung frei eingeklemmt wird, um den Flansch und das Element mit der Dichtung dazwischen gegenseitig unter gleichmäßig radial verteiltem Druck zu verbinden.

2. Verfahren gemäß Anspruch 1, wobei Anpassen des Flansches umfasst: Messen der Position des Flansches relativ zum Element um den Rand davon; Fixieren des Flansches bei einer Position entlang des Randes, wo die gemessene Position eine minimale Abweichung relativ zu einer gewünschten Position hat; und kontrolliertes Deformieren des Flansches und/oder des dazugehörigen Rohrsegments, bis wenigstens um den Rand davon der Flansch die minimale Abweichung relativ zur gewünschten Position hat.

3. Verfahren gemäß Anspruch 2, wobei das Deformieren umfasst: Festziehen von Kopplungen in einem Abstand von der Fixierungsposition.

4. Verfahren gemäß Anspruch 1, 2 oder 3, wobei der Flansch eine Kontaktfläche (19) umfasst, die von einem Rand umschlossen ist, um die Dichtung in einem montierten Zustand des Anschlusses dazwischen zu klemmen, welches ferner ein kontrolliertes Deformieren der Kontaktfläche des Flansches umfasst.

5. Verfahren gemäß Anspruch 4, wobei die Kontaktfläche ein Gepräge umfasst, das von einem ringförmigen Flanschteil (20) zum Ansetzen an die und Positionieren der Kopplungen umschlossen ist und der eine Form hat, die der Dichtung entspricht, gegen welches Gepräge die Dichtung zu liegen kommen muss und das sich relativ zum ringförmigen Flanschteil auf der Seite des Flansches gegenüber dem Rohrsegment wölbt.

6. Verfahren gemäß einem der vorhergehenden Ansprüche, welches ferner ein Vergleichen einer Anfangsposition des Flansches relativ zum Element mit einem Grenzwert umfasst, und ein Festziehen der Kopplungen, während sie die Dichtung umschließen, nur wenn diese Anfangsposition einem Wert geringer als der Grenzwert entspricht.

7. Verfahren gemäß Anspruch 2 und 6, welches ein Detektieren einer Kraft umfasst, die zum parallelen Anpassen des Flansches benötigt wird, wobei der Grenzwert ein vorbestimmter Wert dieser Kraft ist.

8. Verfahren gemäß einem der vorgehenden Ansprüche, welches ferner ein Bestimmen einer Anfangsposition des zu verbindenden Flansches umfasst, Bestimmen eines dazugehörigen Parameters, wie eine Kraft, die zum deformierenden Anpassen des Flansches benötigt wird, und Treffen einer Auswahl in Übereinstimmung damit einer Kopplung und/oder Dichtung, die zu diesem Zweck geeignet ist, aus Gruppen von Kopplungen und Dichtungen, die für spezifische Bedingungen, wie den relevanten Parameter, geeignet sind.

9. Verfahren gemäß einem der vorhergehenden Ansprüche, welches ferner ein Ausrichten des Rohrsegments mit dem Flansch und dem Element vor einem Festziehen der Kopplungen umfasst.

## Revendications

1. Procédé pour assembler une connexion d'au moins un segment de tube (6) à un élément sensiblement plat (8), tel qu'un segment de tube supplémentaire avec une connexion à froid sur celui-ci, qui comprend : une bride faisant saillie radialement sur le segment de tube au niveau ou à proximité de l'extrémité du segment de tube devant être connecté, un joint d'étanchéité (9) destiné à être serré contre la bride, et plusieurs accouplements (10, 11) répartis autour de la périphérie de la bride pour serrer le joint avec force entre la bride et l'élément, dans lequel le procédé comprend les étapes consistant à : ajuster la bride d'une manière déformante par rapport à l'élément et/ou le segment de tube associé au moins sans pratiquement appuyer sur le joint d'étanchéité, et serrer ensuite les accouplements tout en serrant librement le joint d'étanchéité pour relier mutuellement la bride et l'élément, le joint d'étanchéité étant entre ceux-ci sous une pression qui est répartie radialement d'une manière uniforme.

2. Procédé selon la revendication 1, dans lequel un ajustement de la bride comprend les étapes consistant à : mesurer la position de la bride par rapport à l'élément autour de sa périphérie, fixer la bride dans une position le long de la périphérie dans laquelle la position mesurée a un écart minimum par rapport à une position souhaitée, et déformer la bride et/ou le segment de tube associé d'une manière commandée jusqu'à ce que, au moins autour de sa périphérie, la bride ait l'écart minimum par rapport à la position souhaitée.

3. Procédé selon la revendication 2, dans lequel la déformation comprend les étapes consistant à : serrer des accouplements à une distance de la position de fixation.

4. Procédé selon la revendication 1, 2 ou 3, dans lequel la bride comprend une surface de contact (19) entourée par une périphérie pour serrage du joint d'étanchéité entre celles-ci dans un état assemblé de la connexion, comprenant en outre la déformation de la surface de contact de la bride d'une manière commandée.

5. Procédé selon la revendication 4, dans lequel la surface de contact comprend une empreinte qui est entourée par une partie de bride annulaire (20) pour une mise en prise par des accouplements et un positionnement de ceux-ci, et qui a une forme correspondant au joint d'étanchéité, contre laquelle une empreinte du joint d'étanchéité doit venir se positionner et qui est en saillie par rapport à la partie de bride annulaire sur le côté de la bride opposé au segment de tube.

6. Procédé selon l'une quelconque des revendications précédentes, comprenant en outre la comparaison d'une position initiale de la bride par rapport à l'élément avec une valeur limite, et le serrage des accouplements tout en entourant le joint d'étanchéité uniquement lorsque cette position initiale correspond à une valeur inférieure à la valeur limite.

7. Procédé selon les revendications 2 et 6, comprenant la détection d'une force nécessaire pour un ajustement parallèle de la bride, dans lequel la valeur limite est une valeur prédéterminée de cette force.

8. Procédé selon l'une quelconque des revendications précédentes, consistant en outre à déterminer une position initiale de la bride à connecter, déterminer un paramètre associé, tel qu'une force, nécessaire pour déformer un ajustement de la bride, et faire en conséquence une sélection d'un accouplement et/ou joint d'étanchéité adapté dans ce but parmi des groupes d'accouplements et de joints d'étanchéité adaptés pour des conditions spécifiques, comme paramètre pertinent.

9. Procédé selon l'une quelconque des revendications précédentes, comportant en outre l'alignement du segment de tube avec la bride et l'élément avant un serrage des accouplements.
